(19) Europäisches Patentamt
European Patent Office
Office européen des brevets

(11) **EP 3 308 236 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **16727304.4**

(22) Anmeldetag: **02.06.2016**

(51) Int Cl.:
***G05D 16/20*** *(2006.01)*

(86) Internationale Anmeldenummer:
**PCT/EP2016/000897**

(87) Internationale Veröffentlichungsnummer:
**WO 2016/198149 (15.12.2016 Gazette 2016/50)**

(54) **DRUCKREGELVORRICHTUNG**

PRESSURE CONTROL DEVICE

DISPOSITIF DE RÉGULATION DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2015 DE 102015007424**

(43) Veröffentlichungstag der Anmeldung:
**18.04.2018 Patentblatt 2018/16**

(73) Patentinhaber: **Hydac Fluidtechnik GmbH**
**66280 Sulzbach/Saar (DE)**

(72) Erfinder:
• **SCHULZ, Frank**
**66440 Blieskastel-Bierbach (DE)**
• **REIK, Michael**
**66119 Saarbrücken (DE)**

(74) Vertreter: **Bartels und Partner, Patentanwälte**
**Lange Strasse 51**
**70174 Stuttgart (DE)**

(56) Entgegenhaltungen:
| DE-A1- 3 627 278 | DE-A1- 4 331 930 |
| DE-A1-102009 057 359 | DE-A1-102011 118 651 |
| DE-A1-102013 016 759 | DE-A1-102013 205 961 |
| US-A1- 2013 111 897 | |

**Beschreibung**

Die Erfindung betrifft eine Druckregelvorrichtung zur stetigen Einstellung von Hydrauliksystemen.

Üblicherweise werden zur stetigen Einstellung eines Hydrauliksystems sog. Proportionalventile eingesetzt. Diese Proportionalventile sind Steuergeräte mit elektrischem Eingangssignal, die ein Hydrauliksystem nach Steuerungsanweisung mit stetiger Signalbildung einstellen, um die Ausgangsgröße der Strecke, beispielsweise in Form der Kraft eines hydraulischen Arbeitszylinders, stetig zu beeinflussen.

Eingabeglied für das elektrische Signal, insbesondere in Form von Strom, ist der sog. Proportionalmagnet, der ein elektrisches Signal in eine Kraft umwandelt. Der Proportionalmagnet übt über das von ihm erzeugte Magnetfeld eine Kraft auf einen ferromagnetischen Körper aus, regelmäßig in Form eines Magnetankers. Über eine Anpassung der Steuergeometrie in Verbindung mit einer unmagnetischen Zone kann die Magnetkraft-Hub-Kennlinie dahingehend variieren, dass eine nahezu wegunabhängige konstante Magnetkraft erzeugt werden kann. Die unmagnetische Zone wird üblicherweise durch einen Schweißprozess erzeugt, welcher, um eine gleichbleibende Qualität erzielen zu können, mit einem sehr hohen Aufwand überwacht werden muss. Das angesprochene elektrische Signal wird von einer Verstärkerelektronik mit interner Stromregelung erzeugt. Dabei wird die Widerstandsänderung der Spule durch den elektrischen Strom kompensiert sowie die Strombeeinflussung durch die Bewegung des ferromagnetischen Ankers im Magnetfeld. Üblicherweise muss auch ein überlagerter, sog. Dither zur Reibungsminimierung angewendet werden. Diese Maßnahmen zur Reibungsminimierung auf der elektrischen Seite des Ventils erfordern dann wiederum geeignete Maßnahmen beim mechanischen Teil des Proportionalventils, wie die Lagerung des ferromagnetischen Ankers und hochgenau bearbeitete Flächen zur Führung der mechanischen Bauteile.

Um die vorstehend beschriebenen Nachteile von Proportionalventilen zu vermeiden, ist in der EP 2 431 640 A2 bereits ein Verfahren zum Ansteuern einer ballistischen Bewegung eines Sperrkörpers eines Ventils aufgezeigt, wobei der Sperrkörper zur Sperrung eines Durchflussquerschnitts des Ventils ausgebildet ist, wobei der Sperrkörper in eine erste Schaltstellung und eine zweite Schaltstellung schaltbar ist, wobei der Sperrkörper in einer Ruhelage die erste Schaltstellung einnimmt, und wobei der Sperrkörper entsprechend auf ein Aktivierungssignal aus seiner Ruhelage bewegt wird.

Das dahingehend bekannte Verfahren wird auf eine hydraulische Steuerung zur Versorgung und zeit- und mengengenauen Dosierung von Schmierstoff an einer Schmierstelle in einem 2-Takt-Großdieselmotor eingesetzt. Die Schmiermenge wird dabei über ein 2/2-Wege-Ventil dosiert, welches ballistisch angesteuert wird. Das heißt, das Ventil wird über Strompulse kurzer Dauer angesteuert, die in der Regel nicht ausreichen, den Ventilkolben in seine Endlage bei voller Öffnung zu bringen. Der Öffnungshub erfolgt ballistisch, d.h. der Kolben wird durch die pulsartige Magnetbetätigung in Öffnungsrichtung gestoßen und fällt unter Einwirkung der entgegengesetzt dieser Bewegung wirkenden Ventilfeder und den am Ventil anstehenden Strömungskräften wieder in seine geschlossene Endlage zurück. Die Dauer des Pulses bestimmt dabei die pro ballistischen Öffnungshub dosierte Ölmenge.

Mit dem genannten Betriebsmodus lassen sich bei der bekannten Ansteuerlösung mittlere Volumenströme einstellen, die beispielsweise um einen Faktor 1/10000 unter dem Nennvolumenstrom des Grundventils liegen können.

Die DE 10 2011 118 651 A1 offenbart eine Druckregelvorrichtung, bestehend aus mindestens zwei sitzdichten Schaltventilen, einer Regeleinrichtung, einer Sensoreinrichtung, und einer Spannungsversorgung.

Die DE 36 27 278 A1, die US 2013/111897 A1 und die DE 10 2013 205 961 A1 offenbaren Regelvorrichtungen.

Ausgehend von diesem Stand der Technik liegt der Erfindung die Aufgabe zugrunde, handelsübliche Proportional-Druckregelventile von ihrem Ventilverhalten her mit vereinfachten Mitteln und somit kostengünstig sowie in funktionssicherer Weise mit anderen Mitteln zu realisieren.

Eine dahingehende Aufgabe löst eine Druckregelvorrichtung mit den Merkmalen des Patentanspruchs 1 zur stetigen Einstellung von Hydrauliksystemen, die ein digitales Druckregelventil aufweist, bestehend aus mindestens

- zwei sitzdichten Schaltventilen, die mittels eines Ventiltreibers ansteuerbar sind, bestehend aus elektronischen Schaltern, die von Transistoren, vorzugsweise Feldeffekt-Transistoren (FET), als Bestandteil einer Regeleinrichtung angesteuert sind, die zwei einzelne Regler (PID) aufweist, von denen der eine eine Druckminderfunktion und der andere eine Druckbegrenzungsfunktion für die jeweiligen Schaltventile regelt;

- einer Sensoreinrichtung (20); und

- einer Spannungsversorgung (24) für die vorstehend genannten Komponenten.

Mit der erfindungsgemäßen Lösung ist es möglich, besonders einfach die Ausgangsgröße einer Strecke mit Schaltventilen, vorzugsweise mit sitzdichten Schaltventilen, und ohne komplexe Verstärkerelektronik, stetig einzustellen. Die erfindungsgemäße Lösung ermöglicht ein verschleißarmes Schalten des jeweiligen Ventils. Alle etwaig auftretenden Nichtlinearitäten werden durch die Regeleinrichtung derart günstig beeinflusst, dass jedenfalls eine stetige Einstellung ermöglicht ist. Die erfindungsgemäße Druckregelvorrichtung ist da-

Die nach der Erfindung eingesetzten Schaltventile sind vom konstruktiven Aufbau des Magnetsystems her wesentlich einfacher als Proportionalventile zu realisieren. Insbesondere das Steuer-Konussystem kann einfacher realisiert werden, da man nicht zwingend, wie beim Proportional-Druckregelventil, im Wesentlichen horizontal verlaufende Kraft-Hub-Kennlinien einzuhalten braucht. Alle Abweichungen bezüglich der Magnetkraft, welche durch den Schweißprozess und durch die Fertigung bei den bekannten Proportionalventilen entstehen, spielen keine Rolle, solange eine Mindestkraft erreicht wird. Das Gleiche gilt auch für die Varianz der Magnetkraftlinie in der Serienproduktion. Des Weiteren ist eine übliche Lagerung des Magnetankers mit DU-Lager zur Reibungsreduzierung sowie die Dither-Ansteuerung nicht notwendig.

In Kombination mit einer oder mehreren Sensoreinrichtungen, insbesondere unter Einsatz mindestens eines Drucksensors, und einer geeigneten Mikroprozessoreinheit ergibt sich die Möglichkeit, vollwertige Proportionalventile in einfacher Weise nachzubauen. Dabei genügen Prozessoren mit geringer Taktfrequenz, was die Kosten für die Gesamt-Druckregelvorrichtung senken hilft.

Der im Rahmen der Druckregelvorrichtung eingesetzte Regelkreis besteht aus der Regeleinrichtung selbst, dem Stellglied regelmäßig bestehend aus dem eigentlichen Magnetventil und einem Ventiltreiber, dem Hydrauliksystem und dem bereits angesprochenen Sensor. Dieser Sensor der Sensoreinrichtung sendet den aktuellen Messwert oder Ist-Wert als Signal zum Mikroprozessor. Dieser vergleicht dann diesen Ist-Wert mit dem Soll-Wert, der von einer übergeordneten Eingabestelle zum Mikroprozessor gelangt. In Abhängigkeit der Größe des Fehlers e, der sich aus der Differenz von Soll-Wert mit dem Ist-Wert ergibt, bestimmt der Mikroprozessor die weitere Schaltweise für die eingesetzten beiden Ventile. Durch dieses System wird ein proportionales Verhalten eines Proportional-Druckregelventils mit zwei einfachen Schaltventilen erreicht. Dahingehende Schaltventile haben im Gegensatz zu Proportionalventilen keine Hysterese und mit der erfindungsgemäßen Druckregelvorrichtung lassen sich ohne weiteres eine Druckminderfunktion, eine Druckbegrenzung oder eine Druckregelung realisieren.

Im Folgenden wird die erfindungsgemäße Druckregelvorrichtung anhand eines Ausführungsbeispiels nach der Zeichnung näher erläutert. Dabei zeigen in prinzipieller und nicht maßstäblicher Darstellung die

Fig. 1 in der Art eines elektrischen und hydraulischen Schaltplans den grundsätzlichen Aufbau der Druckregelvorrichtung; und

Fig. 2 den zeitlichen Druckverlauf bei einer Druckregelung mit einer Druckregelvorrichtung nach der Fig. 1.

Zunächst sei anhand eines handelsüblichen Proportional-Druckregelventils kurz dessen Funktion erklärt, die auch mit der erfindungsgemäßen Druckregelvorrichtung realisiert werden soll. Bei den dahingehenden Druckreglern handelt es sich regelmäßig um solche in Schieberbauweise. Im unbestromten Zustand ist dabei der Druckversorgungs- oder Pumpenanschluss verschlossen. Ferner ist der Verbraucheranschluss mit dem Tankanschluss fluidführend verbunden. Wird nun ein Stromsignal an den Proportionalmagneten des Druckregelventils angelegt, drückt der Magnet mit einer der Höhe des Steuerstroms entsprechenden Kraft auf den Regelkolben des Ventils. Dadurch wird der Regelkolben gegen eine Rückstellfeder verschoben und das Hydrauliköl strömt vom Druckversorgungs- oder Pumpenanschluss zum Verbraucheranschluss. Durch einen am Verbraucheranschluss angeschlossenen hydraulischen Verbraucher, beispielsweise in Form eines Wege-Schieberventils, baut sich am Verbraucheranschluss ein Druck auf, der beispielsweise auf einen Druckmeldestift des Proportional-Druckregelventils einwirken kann und insoweit eine Gegenkraft zur Kraft des Proportionalmagneten erzeugt. Dadurch ergibt sich wiederum eine Bewegung des Regelkolbens mit dem Druckmeldestift zurück in die vorstehend beschriebene Ausgangslage, was zur Folge hat, dass der Zufluss vom Druckversorgungs- oder Pumpenanschluss zum Verbraucheranschluss verringert wird, bis wiederum der am Verbraucheranschluss anliegende Druck der Magnetkraft abzüglich der Federkraft der Rückstellfeder und damit der Druckwert-Vorgabe über dem anstehenden Stromsignal entspricht. Benötigt der angeschlossene Verbraucher am Verbraucheranschluss keine Druckflüssigkeit mehr, beispielsweise weil das angesprochene Wege-Schieberventil sich am Anschlag befindet, bewegt sich der Regelkolben weiter zurück und verschließt die Zulaufbohrungen.

Fällt der Ausgangsdruck durch die Entlastung des Verbrauchers am Verbraucheranschluss des Ventils unter die Druckvorgabe, drückt der Magnetanker den Regelkolben wiederum in eine Regelposition und der Regelvorgang beginnt erneut. Der maximal erreichbare Regeldruck wird dabei durch die Magnetkraft des Proportionalmagneten dem Grunde nach festgelegt. Steigt der Druck am Verbraucheranschluss über den Vorgabewert an, wird der Regelkolben mit dem Magnetanker derart verschoben, dass die Verbindung vom Verbraucheranschluss zum Tankanschluss geöffnet wird. Hierdurch lässt sich der Druck am Verbraucheranschluss begrenzen. Im Falle einer Unterbrechung des Steuerstroms wird der Regelkolben vom Druck am Verbraucheranschluss und der Rückstellfeder zurückgezogen. Dadurch wird der Verbraucheranschluss mit dem Tankanschluss verbunden und der Verbraucherdruck am Verbraucheranschluss fällt auf das Tankniveau, das am Tankanschluss ansteht, ab.

Die vorstehend beschriebene bekannte Druckregelfunktion für ein handelsübliches Proportional-Druckregelventil wird nunmehr gemäß der Erfindung mit zwei sitzdichten 2/2-Wege-Schaltventilen nachgebildet. Dabei erlauben die dahingehenden sitzdichten Ventile ein leckagefreies Absperren des an das Ventil angeschlossenen hydraulischen Verbrauchers.

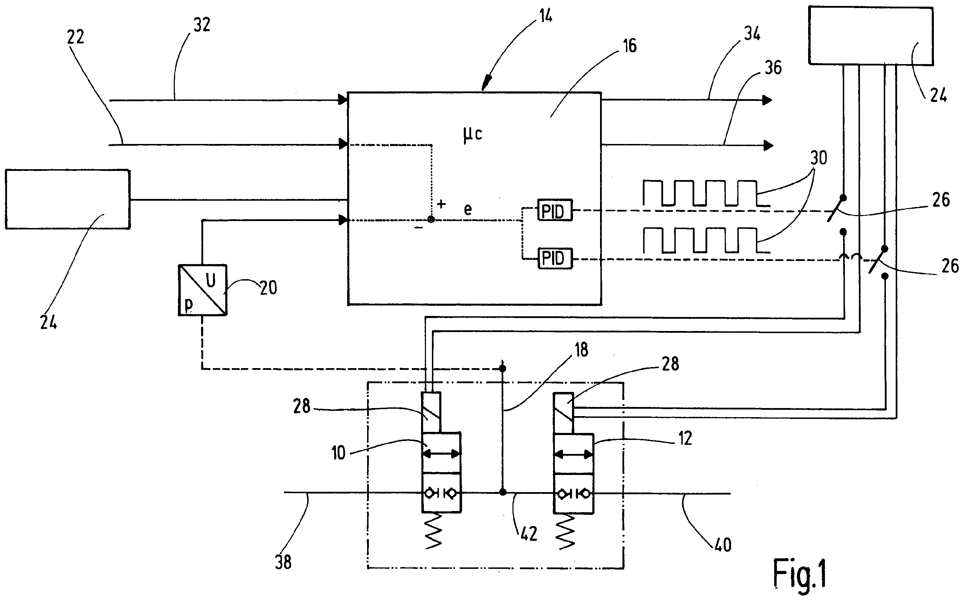

Um dies näher zu erläutern, wird auf die Darstellung nach der Fig. 1 zurückgegriffen, die die wesentlichen Komponenten der erfindungsgemäßen Druckregelvorrichtung zeigt. Diese besteht aus zwei Schaltventilen 10, 12, die vorzugsweise sitzdicht als 2/2-Wege-Schaltventile, ausgebildet sind. In der gezeigten Ausführungsform nach der Fig. 1 ist das Schaltventil 10 zur Realisierung einer Druckminderfunktion eingesetzt und das zweite Schaltventil 12 dient zur Realisierung einer Druckbegrenzungsfunktion. Des Weiteren weist die erfindungsgemäße Druckregelvorrichtung eine als Ganzes mit 14 bezeichnete Regeleinrichtung auf mit einem Rechner 16, vorzugsweise in Form eines Mikroprozessors $\mu$c. Der auf dem Mikroprozessor $\mu$c laufende Regelalgorithmus erlaubt eine Ansteuerregelung, insbesondere in Form einer PID-Regelung sowohl für das Schaltventil 10 als auch für das Schaltventil 12. Zwischen die beiden Schaltventile 10, 12 mündet eine Druckversorgungsleitung 18 ein, die zu einem nicht näher dargestellten hydraulischen Verbraucher führt, beispielsweise auf die Kolbenseite eines hydraulischen Arbeitszylinders ausmündet. An die Druckversorgungsleitung 18 ist eine Sensoreinrichtung 20 angeschlossen, insbesondere in Form eines handelsüblichen Drucksensors, der den jeweils in der Druckversorgungsleitung 18 anstehenden Verbraucherdruck in einen Ist-Spannungswert umwandelt, der als Eingangsgröße für die Regeleinrichtung 14 dient. Dieser Ist-Spannungswert wird mit einem weiteren Eingangswert der Regeleinrichtung 14 in Form der Soll-Wert-Vorgabe 22 innerhalb des Mikroprozessors $\mu$c durch den angesprochenen Regelalgorithmus verglichen, wobei die dahingehende Soll-Wert-Vorgabe 22 einem weiteren Spannungswert entspricht, der sich aus einer Druck-Soll-Vorgabe ergibt, die beispielsweise die ausgefahrene Kolben-Stangeneinheit des angesprochenen hydraulischen Arbeitszylinders unter Last einnehmen soll. Anstelle der genannten Spannungswerte lassen sich auch elektrische Stromgrößen einsetzen.

Neben einer Spannungsversorgung 24 in Form üblicher Spannungsquellen 24 benötigen die angesprochenen Schaltventile 10, 12 noch einen sog. Ventiltreiber, bestehend aus elektronischen Schaltern 26 und daran angeschlossenen Stellmagneten. Die Schalter 26 werden vorzugsweise von sog. Feldeffekt-Transistoren (FET) angesteuert, die Bestandteil der Regeleinrichtung 14 sind. Die insoweit nicht dargestellten Transistoren üblicher Bauart erhalten ihre Eingangssignale von der bereits angesprochenen PID-Regelung für jedes Schaltventil 10, 12. Die Ausgangssignale der PID-Regler sind in der Fig. 1 in Form von Rechtecksignalen 30 symbolhaft wiedergegeben. Darüber hinaus verfügt die Regeleinrichtung 14 für einen sinnfälligen Betrieb noch über einen weiteren Eingang 32 für den Erhalt eines sog. Freigabesignals einer übergeordneten Steuerung, die auch aus einer Maschinensteuerung bestehen kann, und verfügt über zwei weitere Ausgänge 34, 36, einmal für die Erfassung von Störungssignalen bzw. für eine Messwerterfassung. Für einen sinnfälligen Betrieb der erfindungsgemäßen Druckregelvorrichtung ist es darüber hinaus notwendig, dass das erste Schaltventil 10 auf seiner Eingangsseite an einen Druckversorgungs- oder Pumpenanschluss 38 angeschlossen ist, und dass das zweite Schaltventil auf seiner Ausgangsseite über einen Tankanschluss 40 verfügt, der Tankdruck oder Umgebungsdruck aufweist. Ferner ist das Schaltventil 10 auf seiner Ausgangsseite an eine Verbindungsleitung 42 angeschlossen, die auf die Eingangsseite des zweiten Schaltventils 12 führt, wobei, wie bereits angesprochen, die Druckversorgungsleitung 18 für den hydraulischen Verbraucher in die Verbindungsleitung 42 fluidführend einmündet.

Die angesprochenen beiden Schaltventile 10, 12 stellen die sog. Steuerkanten der vorstehend beschriebenen Druckregelvorrichtung dar. Dabei übernimmt die eine Steuerkante als sog. Pumpensteuerkante des ersten Schaltventils 10 die Druckminderfunktion und die andere Steuerkante als sog. Tanksteuerkante des zweiten Schaltventils 12 die Druckbegrenzungsfunktion. Der in Blickrichtung auf die Fig. 1 gesehen oben dargestellte PID-Regler übernimmt dabei den Betrieb für die Druckminderfunktion betreffend das erste Schaltventil und der untere PID-Regler den Betrieb für die Druckbegrenzungsfunktion für das zweite Schaltventil 12.

Der in der Fig. 1 gezeigte Drucksensor als Teil der Drucksensoreinrichtung 20 misst am nicht näher dargestellten hydraulischen Verbraucher den aktuellen Druckwert über dessen Druckversorgungsleitung 18. Dieser Ist-Druck wird in die Regeleinrichtung 14 eingelesen und mit dem Soll-Wert an der Soll-Wert-Vorgabe 22 verglichen. In Abhängigkeit des Fehlers e = Soll-Wert abzügl. dem Ist-Wert entscheidet dann der Regelalgorithmus, welche Steuerkante geöffnet werden muss, um auf den gewünschten Soll-Wert zu gelangen und um dergestalt die Regelabweichung zu minimieren. Hierfür berechnet der Regelalgorithmus die Einschaltdauer für den jeweiligen Transistor und gibt die Einschaltdauer für die Transistoren resp. für die Schalter 26 vor. Ist der angesprochene Fehler e klein, werden beide Ventile 10, 12 sitzdicht geschlossen. Dies ist im Vergleich zu den angesprochenen bekannten Proportional-Ventilen energetisch sehr günstig, da zum einen keine Leckage in Richtung des Tankanschlusses 40 entsteht und somit nicht unnötig hydraulische Energie verschwendet wird. Da die angesprochenen Stellmagnete 28 über bestrombare Spulen verfügen, müssen diese für einen sinnfälligen Betrieb der Druckregelvorrichtung nicht ständig bestromt werden, so dass sich diese auch nicht erwärmen können, was für manche Anwendungen der Druckregelvorrichtung unerwünscht ist.

Die PWM(Pulsweitenmodulierte)-Frequenz sollte vorzugsweise deutlich über der sog. Eckfrequenz der beiden Ventile 10, 12 liegen, was die Mechanik inklusive der Stellmagnete 28 für die Ventile betrifft. Ein ProportionalVentil reagiert immer nur auf den Druck in unmittelbarer Nähe zum Ventil. Gemäß der vorgeschlagenen erfindungsgemäßen Druckregelvorrichtung kann die Regelgröße selbst an einem beliebigen Ort im hydraulischen System abgegriffen werden. Somit ist die Regelstrecke selbst beliebig, abgestimmt auf das Gesamtsystem und die Regelaufgabe, wählbar.

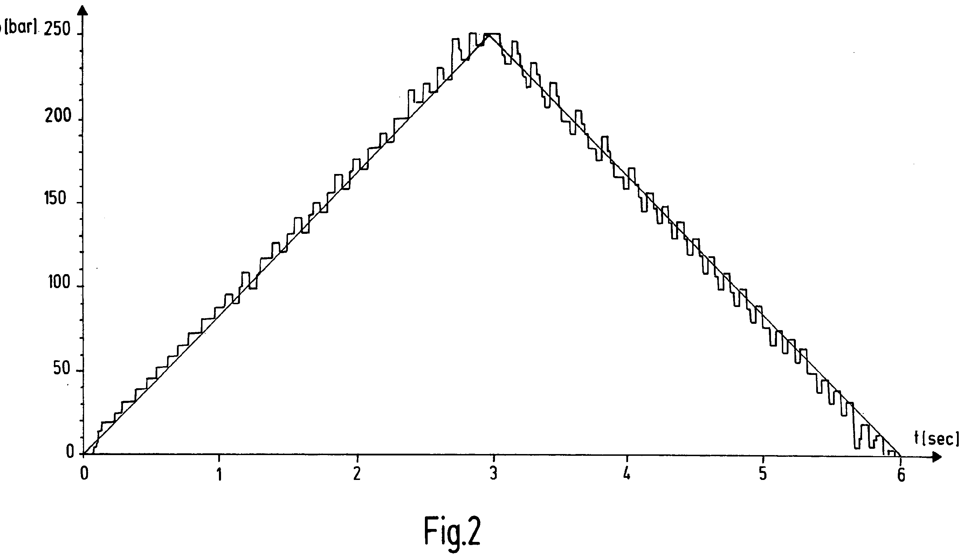

Zur weiteren Erläuterung sei auf die Fig. 2 verwiesen, die einen berechneten Druckverlauf in bar (gestufter Kurvenverlauf) über der Zeit bei einer vorgegebenen Druckrampe, die als linear verlaufendes Dreieck dargestellt ist, angibt. Die Druckregelvorrichtung war dabei an ein abgeschlossenes, nicht veränderliches Volumen angeschlossen (V = const. = 0,15 l).

Das digitale Druckregelventil nach der Fig. 1 besteht, wie dargelegt, aus den beiden Schaltventilen 10, 12, die hier nachfolgend unmittelbar als zwei Steuerkanten bezeichnet werden. Dabei lässt eine Pumpensteuerkante Öl von der Pumpe (Anschluss 38) zum Verbraucher zu und die tankseitige Steuerkante transportiert Öl vom Verbraucher zum Tankanschluss 40.

Um den Druck zu ändern, wird das Schließelement der Steuerkante nach der Druckänderungsgeschwindigkeit

$$= \frac{E}{V} \cdot \sum Q$$

geöffnet, d.h. die Regeleinrichtung 14 öffnet je nach Fehler die entsprechende Steuerkante, um den Druck zu erhöhen oder zu reduzieren. Der Öffnungsquerschnitt A ergibt sich ungefähr aus der nachfolgenden Formel A $\approx$ d $\cdot$ $\pi$ $\cdot$ x. Hierbei stellt d den Sitzdurchmesser des jeweiligen Ventils dar und der Hub x des Ventilkolbens ist nach obiger Gleichung für die Druckänderungsgeschwindigkeit abhängig von der Druckdifferenz $\Delta$p zwischen Pumpendruck und Verbraucherdruck bzw. von Verbraucherdruck zu Tankdruck. Weiterhin ist der Hub x des Schließelements auch von dem Elastizitätsmodul E der Flüssigkeit sowie dem Verbrauchervolumen V abhängig. Der Öffnungshub ist hauptsächlich von der Druckdifferenz $\Delta$p abhängig und umso kleiner die Druckdifferenz ist, desto größer der Hub x. Druckdifferenzen von $\Delta$p = 0 bar oder $\Delta$p < 0 bar ergeben maximale Öffnung des jeweiligen Ventils 10, 12. Alle anderen Parameter erwiesen sich in einer Simulation des Ventils als im Wesentlichen konstant. Der Hub x des jeweiligen Ventils 10, 12 wird also nicht direkt durch die Regeleinrichtung 14 bestimmt, sondern ist, wie vorstehend beschrieben, von den dargelegten Systemgrößen abhängig.

Da die innerhalb der erfindungsgemäßen Druckregelvorrichtung eingesetzten Schaltventile 10, 12 Standardventile sind, ergeben sich insoweit keine besonderen Anforderungen bezüglich der Schaltzeit oder der Lebensdauer, die im Übrigen als verschleißarm zu charakterisieren sind. Im Vergleich zu üblichen Schieberventilen sind die Schaltventile 10, 12 als schmutzunempfindlich einzustufen. Durch geringe entstehende hydraulische Verluste sowie bei geringer elektrischer Leistungsaufnahme im Regelbetrieb sind die Ventile 10, 12 als energieeffizient einzustufen. Ist das System stromlos, wird gemäß der Darstellung nach der Fig. 1 das jeweilige Ventil 10, 12 von einer Ventilfeder in die dort gezeigte Sperrstellung gebracht, so dass eine Fail-Safe-Funktion realisiert ist.

Bei den bekannten Proportionalventilen kann der Druck nur direkt am jeweiligen Ventil geregelt werden, wohingegen bei der vorgeschlagenen erfindungsgemäßen Lösung der Drucksensor der Sensoreinrichtung 20 beliebig örtlich getrennt vom jeweiligen Schaltventil 10, 12 angeordnet werden kann. Die Schaltventile 10, 12 selbst sind kostengünstig auf dem Markt erhältlich. Des Weiteren ist mit der erfindungsgemäßen Druckregelvorrichtung eine flexible Anpassung an verschiedene Anwendungen möglich, da die Regeleinrichtung 14 mit dem Mikroprozessor-Rechner 16 frei programmierbar ist und keine Funktionsübernahme durch die Mechanik verlangt ist.

**Patentansprüche**

1. Druckregelvorrichtung zur stetigen Einstellung von Hydrauliksystemen, die ein digitales Druckregelventil aufweist, bestehend aus mindestens

   - zwei sitzdichten Schaltventilen (10, 12), die mittels eines Ventiltreibers ansteuerbar sind, bestehend aus elektronischen Schaltern (26), die von Transistoren als Bestandteil einer Regeleinrichtung (14) angesteuert sind, die zwei einzelne PID-Regler aufweist, von denen der eine eine Druckminderfunktion und der andere eine Druckbegrenzungsfunktion für die jeweiligen Schaltventile (10, 12) regelt;
   - einer Sensoreinrichtung (20); und
   - einer Spannungsversorgung (24) für die vorstehend genannten Komponenten.

2. Druckregelvorrichtung nach Anspruch 1, **dadurch gekennzeichnet, dass** die Transistoren als Feldeffekt-Transistoren (FET) ausgebildet sind.

3. Druckregelvorrichtung nach Anspruch 1 oder 2, **dadurch gekennzeichnet, dass** sie stufenlos elektrisch einstellbar ist.

4. Druckregelvorrichtung nach Anspruch einem der vorstehenden Ansprüche, **dadurch gekennzeichnet, dass** das jeweilige Schaltventil (10, 12) aus einem 2/2-Wege-Schaltventil besteht.

**5.** Druckregelvorrichtung nach einem der vorstehenden Ansprüche, **dadurch gekennzeichnet, dass** das jeweilige Schaltventil (10, 12) mittels eines Ventiltreibers (26, 28) ansteuerbar ist.

**6.** Druckregelvorrichtung nach einem der vorstehenden Ansprüche, **dadurch gekennzeichnet, dass** die Regeleinrichtung (14) einen Rechner (16), vorzugsweise in Form eines Mikroprozessors ($\mu$c), aufweist, der vorzugsweise als Regelalgorithmus mindestens eine PID-Regelung realisiert.

**7.** Druckregelvorrichtung nach einem der vorstehenden Ansprüche, **dadurch gekennzeichnet, dass** die sitzdichten Schaltventile (10, 12) die Steuerkanten der Druckregeleinrichtung abbilden, wobei die eine Steuerkante (10) die Funktion einer Druckminderung und die andere Steuerkante (12) die Funktion einer Druckbegrenzung übernimmt.

**8.** Druckregelvorrichtung nach einem der vorstehenden Ansprüche, **dadurch gekennzeichnet, dass** die Druckregelvorrichtung derart eingerichtet ist, dass die Sensoreinrichtung (20) an einem an die Druckregelvorrichtung angeschlossenen Verbraucher, wie einem hydraulischen Arbeitszylinder oder einen Hydromotor, den aktuell herrschenden Druckwert (p) erfasst, der in die Regeleinrichtung (14) eingelesen und mit einem vorgebbaren Soll-Wert verglichen wird und dass in Abhängigkeit des auftretenden Fehlers (e) zwischen Soll- und Ist-Wert der Regelalgorithmus der Regeleinrichtung (14) entscheidet, welche Steuerkante der beiden Schaltventile (10, 12) im Sinne einer Öffnung des jeweiligen Ventils (10, 12) in eine fluiddurchgängige Stellung auszuwählen ist, um bei einer minimierten Regelabweichung auf den gewünschten Soll-Wert zu kommen.

**9.** Druckregelvorrichtung nach einem der Ansprüche 5 bis 8, **dadurch gekennzeichnet, dass** der Ventiltreiber für das jeweilige Schaltventil (10, 12) aus einer elektromagnetischen Betätigungseinrichtung, wie einem Stellmagneten (28), besteht, die über einen Schalter (26) der an eine elektrische Spannungsversorgung (24) angeschlossen ist, ansteuerbar ist und dass der Regelalgorithmus der Regeleinrichtung (14) die jeweilige Einschaltdauer für den Schalter (26) vorgibt.

**10.** Druckregelvorrichtung nach Anspruch 8 oder 9, **dadurch gekennzeichnet, dass** der jeweilige hydraulische Verbraucher an eine Druckversorgungsleitung (18) angeschlossen ist, die an eine hydraulische Verbindungsleitung (42) zwischen den beiden Schaltventilen (10, 12) angeschlossen ist.

**11.** Druckregelvorrichtung nach einem der Ansprüche 4 bis 10, **dadurch gekennzeichnet, dass** mit den sitzdichten 2/2-Wege-Schaltventilen ein Proportionalventil von seiner Ventilcharakteristik her realisiert ist.

**Claims**

**1.** Pressure control device for continuous adjustment of hydraulic systems, comprising a digital pressure control valve consisting of at least

- two leaktight switching valves (10, 12) which can be controlled by means of a valve driver, consisting of electronic switches (26) which are controlled by transistors as part of a control device (14) which has two individual PID controllers, one of which controls a pressure-reducing function, while the other controls a pressure-limiting function for the respective switching valves (10, 12);
- a sensor device (20); and
- a power supply (24) for the above-mentioned components.

**2.** Pressure control device according to claim 1, **characterised in that** the transistors are designed as field-effect transistors (FET).

**3.** Pressure control device according to either claim 1 or claim 2, **characterised in that** it is continuously electrically adjustable.

**4.** Pressure control device according to any one of the preceding claims, **characterised in that** the respective switching valve (10, 12) consists of a 2/2-way switching valve.

**5.** Pressure control device according to any one of the preceding claims, **characterised in that** the respective switching valve (10, 12) can be controlled by means of a valve driver (26, 28).

**6.** Pressure control device according to any one of the preceding claims, **characterised in that** the control device (14) comprises a computer (16), preferably in the form of a microprocessor ($\mu$c), which preferably carries out at least one PID control operation as a control algorithm.

**7.** Pressure control device according to any one of the preceding claims, **characterised in that** the leaktight switching valves (10, 12) form the control edges of the pressure control device, wherein one control edge (10) is responsible for a pressure-reducing function and the other control edge (12) is responsible for a pressure-limiting function.

**8.** Pressure control device according to any one of the preceding claims, **characterised in that** the pressure control device is set up such that the sensor device (20) on a load, such as a hydraulic work cylinder or a hydraulic motor, connected to the pressure control device, records the pressure value (p) prevailing at any moment in time, said pressure value being entered in the control device (14) and compared with a pre-definable target value, and **in that** the control algorithm in the control device (14) decides, as a function of the resulting error (e) between the target and actual value, which control edge of the two switching valves (10, 12) needs to be selected for the purpose of opening the respective valve (10, 12) to a position allowing fluid to pass through so as to reach the required target value with a minimised control deviation.

9. Pressure control device according to any one of claims 5 to 8, **characterised in that** the valve driver for the respective switching valve (10, 12) consists of an electromagnetic actuating device, such as an actuating solenoid (28), which can be controlled by means of a switch (26) which is connected to an electrical power supply (24), and **in that** the control algorithm in the control device (14) pre-defines the respective switching period for the switch (26).

10. Pressure control device according to either claim 8 or claim 9, **characterised in that** the respective hydraulic load is connected to a pressure supply line (18) which is connected to a hydraulic connection cable (42) between the two switching valves (10, 12).

11. Pressure control device according to any one of claims 4 to 10, **characterised in that** a proportional valve is created with the leaktight 2/2-way switching valves based on its valve characteristics.


**Revendications**

1. Dispositif de régulation de la pression pour régler constamment des systèmes hydrauliques, qui a une soupape numérique de régulation de la pression, constitué d'au moins

    - deux soupapes (10, 12) de commande à siège étanche, qui peuvent être commandées au moyen d'un circuit d'attaque de soupape, constitué d'interrupteurs (26) électroniques, commandés par des transistors comme partie constitutive d'un dispositif (14) de régulation, ayant deux régleurs PID individuels, dont l'un régule une fonction de diminution de la pression et dont l'autre régule une fonction de limitation de la pression pour les soupapes (10, 12) de commande respectives ;
    - un dispositif (20) à capteur ; et
    - une alimentation (24) en tension des composants mentionnés ci-dessus.

2. Dispositif de régulation de la pression suivant la revendication 1, **caractérisé en ce que** les transistors sont constitués en transistors à effet de champ(FET).

3. Dispositif de régulation de la pression suivant la revendication 1 ou 2, **caractérisé en ce qu'**il est réglable électriquement sans palier.

4. Dispositif de régulation de la pression suivant l'une des revendications précédentes, **caractérisé en ce que** la soupape (10, 12) de commande respective est constituée d'une soupape de commande à 2/2 voies.

5. Dispositif de régulation de la pression suivant l'une des revendications précédentes, **caractérisé en ce que** la soupape (10, 12) de commande respective peut être commandée au moyen d'un circuit d'attaque (26, 28) de soupape.

6. Dispositif de régulation de la pression suivant l'une des revendications précédentes, **caractérisé en ce que** le dispositif (14) de réglage a un ordinateur (16), de préférence sous la forme d'un microprocesseur ($\mu$c), qui réalise de préférence comme algorithme de réglage, au moins une régulation PID.

7. Dispositif de régulation de la pression suivant l'une des revendications précédentes, **caractérisé en ce que** les soupapes (10, 12) de commande à siège étanche reproduisent les arêtes de commande du dispositif de régulation de la pression, l'une (10) des arêtes de commande prenant en charge la fonction d'une diminution de la pression et l'autre arête (12) de commande la fonction d'une limitation de la pression.

8. Dispositif de régulation de la pression suivant l'une des revendications précédentes, **caractérisé en ce que** le dispositif de régulation de la pression est agencé de manière à ce que le dispositif (20) à capteur relève, sur un consommateur raccordé au dispositif de régulation de la pression, comme un vérin de travail hydraulique ou un moteur hydraulique, la valeur (p) de pression régnante en cours, qui est entrée en lecture dans le dispositif (14) de réglage et est comparée à une valeur de consigne pouvant être donnée à l'avance, et **en ce qu'**en fonction de l'erreur (e) se produisant entre la valeur de consigne et la valeur réelle, l'algorithme de réglage du dispositif (14) de réglage, décide celle des arêtes de commande des deux soupapes (12, 12) de commande qui doit être choisie au sens d'une ouverture de la soupape (10, 12) respective pour la mettre en une position de passage du fluide, afin d'obtenir un écart de régulation minimisé à la valeur de consigne souhaitée.

9. Dispositif de régulation de la pression suivant l'une des revendications 5 à 8, **caractérisé en ce que** le dispositif d'attaque de la soupape (10, 12) de commande respective est constituée d'un dispositif électromagnétique d'actionnement, comme d'un aimant (28) de réglage, qui peut être commandé par un interrupteur (26) connecté à une source (24) de tension électrique, et **en ce que** l'algorithme de réglage du dispositif (14) de réglage prescrit la durée de fermeture de l'interrupteur (26).

10. Dispositif de régulation de la pression suivant la revendication 8 ou 9, **caractérisé en ce que** le consommateur hydraulique respectif est raccordé à une ligne (18) d'alimentation en pression, qui est raccordée à une ligne (42) hydraulique de liaison entre les deux soupapes (10, 12) de commande.

11. Dispositif de régulation de la pression suivant l'une des revendications 4 à 10, **caractérisé en ce que**, par les vannes de commande à 2/2 voies à siège étanche, il est réalisé, par sa caractéristique de soupape, une soupape proportionnelle.

Fig.1

Fig.2

EP 3 308 236 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2431640 A2
- DE 102011118651 A1
- DE 3627278 A1
- US 2013111897 A1
- DE 102013205961 A1